# EUROPEAN PATENT APPLICATION

(11) **EP 1 575 274 A1**
(43) Date of publication of application: **14.09.2005**
(21) Application number: 05101484.3
(22) Date of filing: 25.02.2005
(51) Int. Cl.: H04N 5/225, G03B 19/07, G03B 17/02

(54) **A camera apparatus**

(30) Priority: 10.03.2004 KR 2004016031
(71) Applicant: SAMSUNG ELECTRONICS CO., LTD., Gyeonggi-Do 442-742 (KR)
(72) Inventor: Ahn, Kyoung-jin, Yeongtong-dong, Yeongtong-gu Gyeonggi-do (KR)
(74) Representative: Geary, Stuart Lloyd

(57) **Abstract**

A housing assembly for an image recording apparatus and method has an outer housing defining an outer side of the image recording apparatus, a liquid crystal display (LCD) monitor connected to the outer housing and foldable with respect to the outer housing, an inner cover, in combination with a display panel assembly, defining an interior portion of the image recording apparatus, and a plurality of component units affixed to the interior portion of the outer housing, with an operating part thereof being exposed outside of the outer housing. The LCD monitor and the component units share a fastening screw with the inner cover for the fastening thereof such that the LCD monitor and the component units are fastened to the outer housing with the inner cover by the common screw.

## Description

The present invention relates to a camera apparatus comprising a housing element having an aperture and a component.

On average, approximately 200 screws or more are required for the assembling of one camera/camcorder apparatus. The camera includes a display unit, as well as board-mounted components such as a lens unit, terminals and a controller, all of which are fastened to the housing of the camera by screws. Also, although the number of components is gradually reducing, the number of screws required to fasten the units has seldom changed.

Indeed, the use of screws is considered as one of the main factors that hinders the development of a compact and light-weight camera. The screw is generally made of steel, and requires manual labour to screw the components to the respective locations. This increases the amount of labour, and burdens workers especially as the size of the screws reduces to effect miniaturisation of the products. Therefore, a housing assembly of a camera which requiring fewer screws for the mounting of each component to the housing is needed.

Accordingly, the present invention has been made to address the above-mentioned problems occurring in the related art, and it is an object of the present invention to provide a housing assembly for a camera and method of assembly, in which optimal arrangements are provided for screwing respective components and the mounting therefor.

The present invention relates to a camera apparatus comprising a housing element having an aperture and a component.

A camera apparatus according to the present invention is characterised by a panel fixed to the housing element by screws across the aperture, at least one of said screws also fixes said component to the housing element.

Additional optional and preferred features are set forth in claims 2 and 3 appended hereto.

An embodiment of the present invention will now be described, by way of example only, and with reference to the accompanying drawings, in which:
Figure 1 is a perspective view of a camera according to an embodiment of the present invention; and
Figure 2 is an exploded perspective view of a housing assembly of a camera according to an embodiment of the present invention.

The same drawing reference numerals are used for the same elements throughout the drawings. Well-known functions or constructions are not described in detail for brevity.

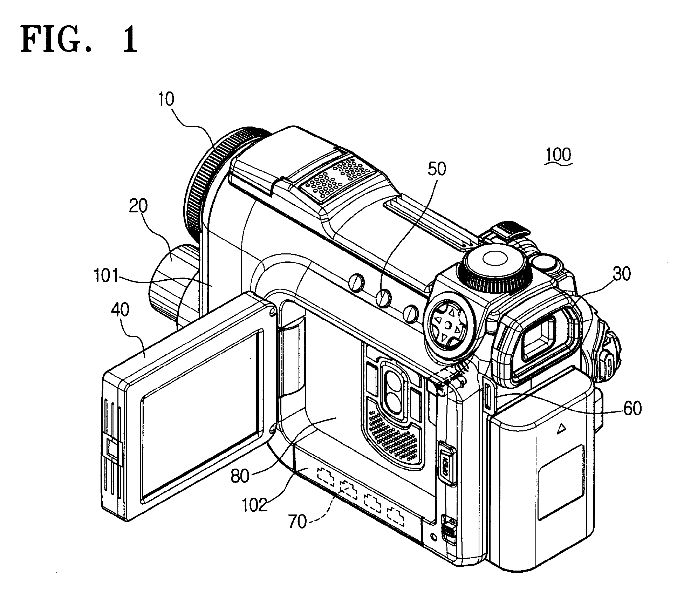

Referring to Figure 1, a camera apparatus 100 according to an embodiment of the present invention comprises a digital video camera (DVC) 10 for capturing moving images, and a digital still camera (DSC) 20 for photographing still images. The DVC 10 and DSC 20 are mounted in the camera apparatus 100 to face forward. A viewfinder 30 is mounted to the rear of the apparatus for the user to view the images.

The camera apparatus 100 also comprises a liquid crystal display (LCD) monitor 40 which is mounted to an outer housing 101 of the camera apparatus 100. The LCD monitor 40 opens outward of the housing 101, so that the user can view the images while photographing. It will be appreciated that other types of monitors can also be used.

A function select key unit 50 protrudes from the upper side portion of the outer housing 101. A handle support bracket 60, which supports a handle strap, an external power source and input/output terminal unit 70 are also provided. Additionally, there is an cover 102 which can be opened and closed. The cover 102 is provided to protect the external power source and input/output terminal unit 70 when not in use.

The camera apparatus 100 has separate modules for photographing both moving images and high-resolution still images. Therefore, there is no need to buy a camcorder to photograph moving images and separately buy a camera to obtain high-resolution still images.

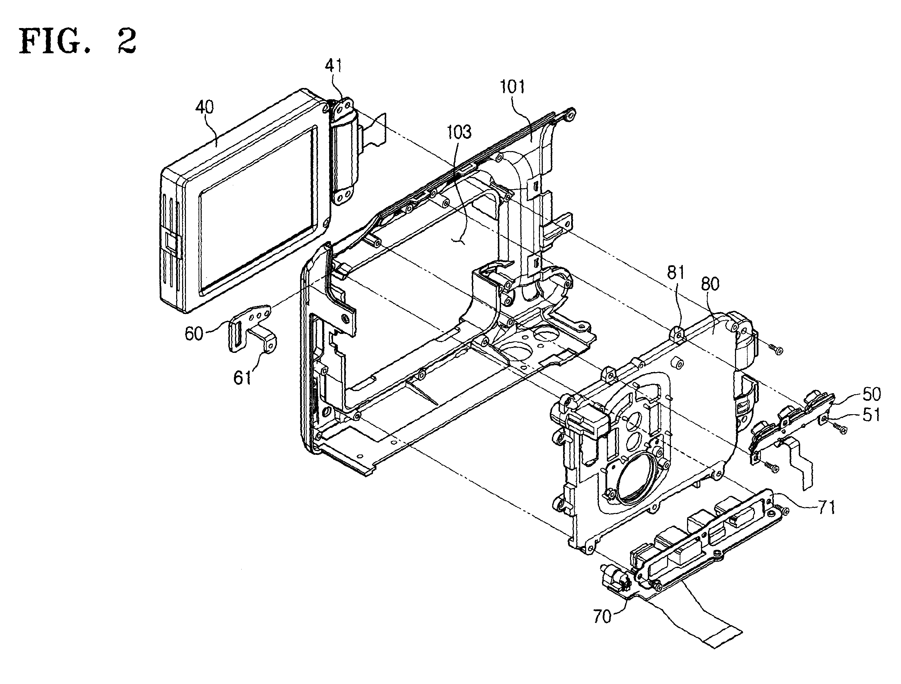

Referring to Figure 2, an LCD seating opening 103 is defined in the outer housing 101 to receive the LCD monitor 40 when the LCD monitor 40 is folded away. The LCD seating opening 103 is formed so that the LCD monitor 40 is flush with the outer housing 101 when folded away. In order to prevent the exposure of the interior of the camera apparatus 100 through the LCD seating opening 103 when the LCD monitor 40 is in use, an inner cover 80 covers the LCD seating opening 103. The inner cover 80 defines the outside and inside of the outer housing 101.

Function keys or speakers are provided in the inner cover 80. In other words, function keys for various additional functions of the camera apparatus 100 are formed on the inner cover 80, with the operating part of the function key being exposed to the outside when the LCD monitor 40 is open.

The LCD monitor 40, the function select key unit 50, the handle support bracket 60, the external power source and input/output terminal unit 70 and the inner cover 80, are all fastened to the rear (inside) side of the outer housing 101 by screws. To this end, a LCD monitor fastening part 41, a function select key unit fastening part 51, a handle support bracket fastening part 61, and a fastening part 71 of the external power source and input/output terminal unit 70, are located to correspond to an inner cover fastening part 81 which are all fastened together by screws allowing the secure mounting of the inner cover 80. The inner cover fastening part 81 is arranged along the outer circumference of the inner cover 80.

Therefore, between the rear (inside) side of the outer housing 101 and the inner cover 80, are the LCD monitor 40, the function select key unit 50, the handle support bracket 60 and the external power source and input/output terminal unit 70, arranged in their respective predetermined positions, and with the respective fastening parts aligned with the inner cover fastening part 81. As a result, the respective units are all securely fastened together with the fastening of the inner cover 80 to the outer housing 101.

In the construction as described above, the number of screws is greatly reduced. Additionally, the amount of labour required, and the time, for the assembling process is reduced.

In the housing assembly for the camera apparatus 100, the screw-fastening parts of the respective components are in an optimal arrangement, and therefore, a plurality of components can be fastened to the housing with common screws. As a result, the number of required screws is reduced, the amount of time to assembly the apparatus is reduced, and the product is made more compact.

## Claims

1. A camera apparatus (100) comprising a housing element (101) having an aperture (103) and a component (40, 50, 60,70), **characterised by** a panel (80) fixed to the housing element (101) by screws across the aperture (103), at least one of said screws also fixes said component (40,50,60,70) to the housing element (101).

2. A camera apparatus according to claim 1, wherein the component (40,50,60,70) comprises an LCD panel (40) mounted on a hinge (41), the hinge (41) being fixedly connected to the housing element (101) by at least one of said screws.

3. A camera apparatus according to either one of claims 1 or 2, wherein the component (40,50,60,70) comprises an input/output terminal unit (70) and/or a function button array (50).

4. A housing assembly for an image recording apparatus, comprising:
an outer housing defining an outer portion of the image recording apparatus;
a liquid crystal display (LCD) monitor connected to the outer housing and being foldable with respect to the outer housing;
an inner cover, in combination with a display panel assembly, defining an interior portion of the image recording apparatus; and
a plurality of component units affixed to the interior portion of the outer housing, with an operating part thereof being exposed outside the outer housing, wherein
the LCD monitor and the component units share a fastening screw with the inner cover for the fastening thereof such that the LCD monitor and the component units are fastened to the outer housing with the inner cover by the common screw.

5. The housing assembly according to claim 4, wherein the component units comprise:
a function select key unit of the image forming apparatus;
an external power source and input/output terminal unit; and
a handle support bracket.

6. The housing assembly according to claim 4, further comprising:
an LCD seating opening for accepting the LCD monitor within the outer housing.

7. The housing assembly according to claim 6, wherein the LCD seating opening is structured to allow the LCD monitor to fit substantially within the outer housing.

8. The housing assembly according to claim 6, wherein the LCD monitor does not protrude outside the outer housing.

9. The housing assembly according to claim 4, wherein the inner cover covers the LCD seating opening when the LCD monitor is in a closed position within the outer housing.

10. The housing assembly according to claim 4, further comprising:
an inner cover fastening part being in alignment with respective fastening parts of the LCD monitor, the external power source and the handle support bracket.

11. A method for connecting a housing assembly using a common screw for a image recording apparatus, comprising:
providing an outer housing defining an outer portion of the image recording apparatus;
connecting a liquid crystal display (LCD) monitor to the outer housing;
providing an inner cover, in combination with a display panel assembly, for defining an interior portion of the image recording apparatus;
affixing a plurality of component units to the interior portion of the outer housing, with an operating part thereof being exposed outside the outer housing; and
fastening the LCD monitor, the component units and the inner cover to the outer housing with a common fastening screw.

12. The method of claim 11, further comprising:
folding the LCD monitor with respect to the outer housing.

13. The method of claim 11, further comprising:
providing a function select key unit for selecting functions of the image forming apparatus;
providing an external power source for powering the image forming apparatus;
providing an input/output terminal unit for communicating with external devices; and
providing a handle support bracket for opening and closing the LCD monitor out of and into respectively the outer housing.

14. The method of claim 11, further comprising:
accepting the LCD monitor within the outer housing via an LCD seating opening.

15. The method of claim 13, further comprising:
structuring the LCD seating opening to allow the LCD monitor to fit substantially within the outer housing.

16. The method of claim 14, further comprising:
covering the LCD seating opening with the inner cover when the LCD monitor is in a closed position within the outer housing.

17. The method of claim 14, further comprising:
aligning an inner cover fastening part with respective fastening parts of the LCD monitor, the external power source and the handle support bracket.
